(19) **Europäisches Patentamt**

**European Patent Office**

**Office européen des brevets**

(11) Veröffentlichungsnummer: **0 240 712 B1**

# (12) EUROPÄISCHE PATENTSCHRIFT

(45) Veröffentlichungstag der Patentschrift: **06.05.92**

(21) Anmeldenummer: **87102996.3**

(22) Anmeldetag: **03.03.87**

(51) Int. Cl.⁵: **B62D 63/06**

---

**(54) Anhänger für Personenkraftwagen.**

---

(30) Priorität: **04.03.86 DE 8605850 U**

(43) Veröffentlichungstag der Anmeldung:
**14.10.87 Patentblatt 87/42**

(45) Bekanntmachung des Hinweises auf die
Patenterteilung:
**06.05.92 Patentblatt 92/19**

(84) Benannte Vertragsstaaten:
**ES GR**

(56) Entgegenhaltungen:
**AT-B- 365 527**
**DE-A- 1 580 647**
**DE-A- 3 012 567**
**DE-A- 3 229 062**
**FR-E- 89 565**

**PATENT ABSTRACTS OF JAPAN, Band 5, Nr.**
**183 (M-97)[855], 21. November 1981; & JP - A**
**- 56 103 658 (TOUKIYUU SHIYARIYOU SEI-**
**ZOU) 18.08.1981**

(73) Patentinhaber: **Waldemar Heinemann GmbH &**
**Co. KG**
**Postfach 1220**
**W-5910 Kreutztal 1(DE)**

(72) Erfinder: **Heinemann, Harald**
**Waldstrasse 25**
**W-5910 Kreuztal(DE)**
Erfinder: **Heinemann, Michael**
**Schneeweissdornstrasse 5**
**W-5910 Kreuztal(DE)**

(74) Vertreter: **Missling, Arne, Dipl.-Ing. et al**
**Patentanwälte Dipl.-Ing. R. Schlee Dipl.-Ing.**
**A. Missling Bismarckstrasse 43**
**W-6300 Giessen(DE)**

Rank Xerox (UK) Business Services
(3.08/2.18/2.0)

## Beschreibung

Die Erfindung bezieht sich auf einen Anhänger für Personenkraftwagen mit einem Wagenkasten, der einen rechteckigen Boden und von den Bodenkanten sich erhebende, aus einem Stück bestehende Bordwände aufweist, wobei die seitlichen Bordwände (Seitenwände) und mindestens eine quer dazu verlaufende Bordwand (Querwand) unmittelbar mit dem Boden verschraubt sind und die Gesamtheit aus Boden. Seitenwänden und Querwand unter Verzicht auf Längsträger eine selbsttragende Einheit bilden.

Ein Anhänger dieser Art hat einen selbsttragenden Kasten, da die Bordwände stabile Längsträger bilden und durch die Verbindung der Bordwand mit dem Boden und der Bordwände untereinander auch eine große Verwindungssteifigkeit erzielt wird. Dadurch lassen sich die Herstellungskosten und das Leergewicht wesentlich herabsetzen Bei einem bekannten Anhänger dieser Art (DE-A1 32 29 062) bestehen die Bordwände aus Aluminium-Strangpreßprofilen. Solche Profile sind relativ teuer.

Der Erfindung liegt die Aufgabe zugrunde, einen Anhänger der eingangs genannten Art so auszubilden, daß er billiger herstellbar ist, wobei eine besonders große Robustheit erreicht werden soll.

Diese Aufgabe wird nach der Erfindung dadurch gelöst, daß die Bordwände aus einteiligen Profilen aus verzinktem Stahlblech bestehen, wobei jede Bordwand längs ihrem oberen und ihrem unteren Rand einen Kanal aufweist und der zwischen den Kanälen liegende mittlere Bordwandbereich einwandig ist, wobei ferner die Kanäle durch eine Überlappung des Bleches geschlossen sind, im Überlappungsbereich eine Verbindung zwischen den aufeinanderliegenden Blechlagen vorgesehen ist und am Rand des Überlappungsbereiches eine Verkröpfung des Profiles etwa um die Dicke des Stahlbleches vorgesehen ist, die den Rand des Blechen übergreift.

Profile aus Stahlblech lassen sich bei entsprechender Massenproduktion relativ billig herstellen. Solche Profile sind außerordentlich robust. Der erfindungsgemäße Anhänger ist deshalb besonders für rauhen Betrieb geeignet, z.B. auch für den Transport von Baumaterialien und dergleichen.

Besonders stabil werden die Bordwände, weil längs dem oberen und dem unteren Rand Kanäle aus dem Stahlblech geformt werden, während der dazwischenliegende Bordwandbereich einwandig sein kann. Diese Ausbildung ist auch in statischere Hinsicht besonders vorteilhaft, da die Bordwand, ähnlich einem I-Träger, einen Obergurt, einen Untergurt und dazwischenliegend einen Steg aufweist. Auch für den Gebrauch ist diese Formgestaltung günstig, da die Bordwände an ihren oberen Rändern relativ breit sind.

Der mittlere Bordwandbereich ist vorzugsweise mittels Längssicken verstärkt. Diese Sicken haben vorzugsweise einen trapezförmigen Querschnitt.

Die Kanäle der Bordwände sind durch eine Überlappung des Bleches geschlossen, wobei im Überlappungsbereich vorzugsweise auch eine Verbindung vorgesehen ist, die insbesondere durch Punktschweißungen hergestellt werden kann. Im Überlappungsbereich ist eine Verkröpfung vorgesehen, wodurch das unerwünschte Vorstehen einer Blechkante vermieden wird und zusätzlich die Steifigkeit des Profiles erhöht wird.

Aus der FR-Patentschrift 89 565 ist es zwar bereits bekannt, Kanäle der o.a. Art vorzusehen; sie sind mit glatt auf das Profil gepunkteten Laschen geschlossen, was dazu führt, daß die Innenwände eines solchen Anhängers nicht glatt sind, so daß beim Be- und Entladen erhebliche Schwierigkeiten auftreten können. Der erfindungsgemäße Anhänger weist einen solchen Nachteil nicht auf: die Bordwände sind innen ganz glatt.

Vorzugsweise ist am unteren Rand jeder Bordwand ein Falz zum Umgreifen des zugeordneten Bodenrandes vorgesehen. Eine Wand des Falzes wird hierbei erfindungsgemäß durch eine Doppelung des Profilbleches erzielt. Zur Verbindung zwischen Boden und Bordwänden werden vorzugsweise Durchsteckschrauben angeordnet. Im Gegensatz zu der eingangs erwähnten bekannten Konstruktion werden diese Schrauben durch einzelne Löcher in der Bordwand hindurchgeführt, während bei der bekannten Konstruktion mit Strangpreßprofilen hierfür ein durchgehender Schlitz vorgesehen ist. Durch die Verwendung von Druckstücken wird einmal eine gute Einleitung der Schraubenkräfte in die Bordwand erzielt und zum anderen auch die

Montage erleichtert, wenn die Muttern undrehbar in dem Druckstück gehalten sind, wie dies vorzugsweise der Fall sein soll.

Es ist vorteilhaft, die Innenseiten der Bordwände im wesentlichen eben auszubilden, da dadurch das Beladen des Kastens erleichtert wird. Dies wird durch Anordnung der Kanäle an den Außenseiten der Bordwände erreicht.

Besonders vorteilhaft ist es, wenn die Kanäle parallele Kanal-Seitenwände haben, die parallel zur allgemeinen Bordwandebene sind, und der obere Kanal eine obere und der untere Kanal eine untere Kanalwand aufweisen, die rechtwinklig zur allgemeinen Bordwandebene verlaufen, und wenn der oberen Kanalwand und der unteren Kanalwand jeweils eine schräge Kanalwand gegenüberliegt, die mit der äußeren Kanal-Seitenwand einen stumpfen Winkel einschließt. Man erhält dadurch eine obere ebene Endfläche und durch die schrägen Kanalwände eine gute Einleitung von Kräften in den Wandbereich, der zwischen den Kanälen liegt.

Die Kanäle können an ihren Enden auf eine geringere Breite reduziert sein, wobei der reduzierte Bereich von Eckprofilen umgriffen ist. Dies ermöglicht die Verwendung gleicher Eckprofile auch für Anhänger, deren Bordwände aus Aluminium-Strangpreßprofilen bestehen, die dünner sind als die Kanäle der Bordwände aus Stahlprofilen gemäß der vorliegenden Erfindung. Verformungstechnisch ist es unproblematisch, Stahl-Bordwände in der Breite zu reduzieren, während dies bei Aluminium-Strangpreßprofilen kaum möglich ist

Gemäß einer weiteren Ausgestaltung sind in den Eckbereichen Füllbleche vorgesehen, die mit einer Wand an Eckprofilen anliegen, die rechtwinklig zueinander stehende Bordwände verbinden und mit der Endkante einer weiteren Wand an die Außenkontur der Bordwände angepaßt sind. Dadurch erreicht man eine Abdichtung in den Eckbereichen des Wagenkastens auch dann, wenn die Bordwände stark profiliert sind.

Für die Bordwände genügt relativ dünnes Blech. Besonders zweckmäßig ist eine Blechdicke von 1,25 mm.

In der Zeichnung ist ein Ausführungsbeispiel der Erfindung dargestellt. Es zeigen:

Fig. 1        eine Seitenansicht eines Anhängers entsprechend dem Pfeil I in Fig. 2,

Fig. 2        einen Grundriß des Anhängers entsprechend dem Pfeil II in Fig. 1 in einem gegenüber Fig. 1 verkleinerten Maßstab,

Fig. 3        einen teilweisen Horizontalschnitt nach Linie III-III in einem gegenüber Fig. 1 vergrößerten Maßstab,

Fig. 4        einen teilweisen Vertikalschnitt nach Linie IV-IV in Fig. 1, jedoch in einer gegenüber Fig. 1 vergrößerten Darstellung und ergänzt zu einer perspektivischen Zeichnung,

Fig. 5        einen Vertikalschnitt im hinteren Bereich des Wagenkastens entsprechend der Linie V-V in Fig. 2,

Fig. 6        einen teilweise Vertikalschnitt im Bereich der Achsaufhängung entsprechend der Linie VI-VI in Fig. 1 und

Fig. 7 und 8        Vertikalschnitte entsprechend Fig. 6 bei anderen Ausführungsformen der Erfindung.

Der Anhänger hat einen Wagenkasten 1, ein Fahrgestell 2 und eine Deichsel 3. Der Wagenkasten besteht aus einem Boden 4, zwei Seitenwänden 5a und 5b, einer fest angeordneten Vorderwand 6 und einer abklappbaren Rückwand 7. Zunächst soll der Aufbau des Wagenkastens betrachtet werden.

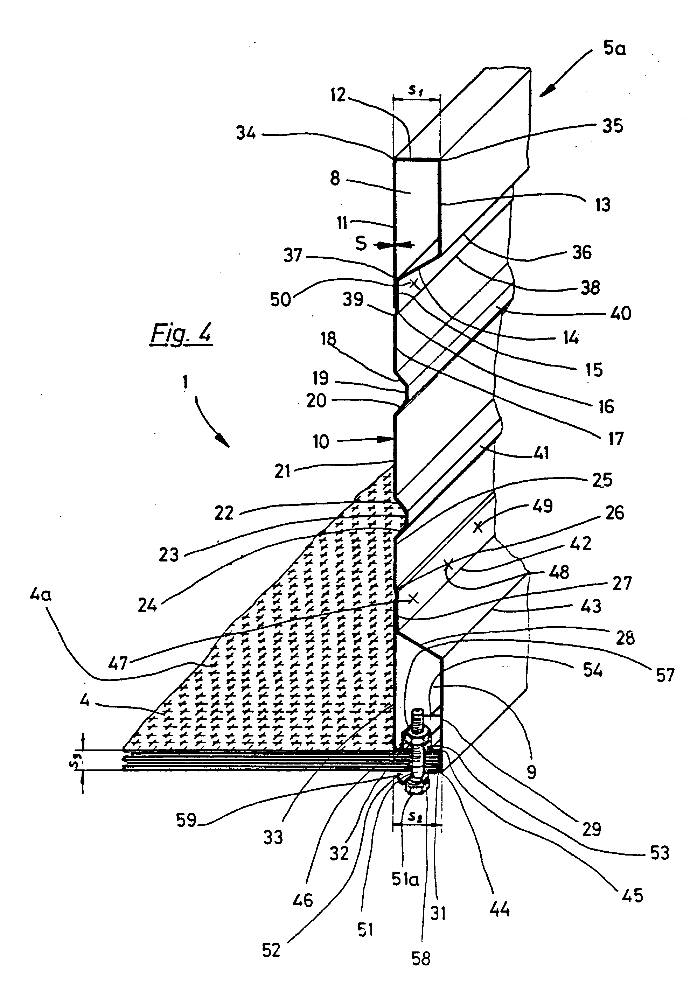

Alle Wände 5a, 5b, 6, 7 haben das gleiche Profil, das in Fig. 4 dargestellt ist. Alle Wände 5a, 5b, 6, 7 sind aus verzinktem Stahlblech hergestellt. Das Profil hat einen oberen Kanal 8, einen unteren Kanal 9 und einen einwandigen Zwischenbereich 10. An dem Profil lassen sich Abschnitte 11 bis 33 unterscheiden. Unter Heranziehung der in Fig. 4 eingetragenen Profilabschnitte wird das Profil nachfolgend im einzelnen beschrieben.

Der Profilabschnitt 11 geht über eine rechtwinklige Abkantung 34 in den horizontalen Profilabschnitt 12 über. Dieser geht wieder über eine rechtwinklige Abkantung 35 in den Profilabschnitt 13 über, der zum Profilabschnitt 11 parallel ist. Der Profilabschnitt 13 geht über eine stumpfwinklige Abkantung 36 in den Profilabschnitt 14 über, der seinerseits über eine stumpfwinklige Abkantung 37 in den Profilabschnitt 14 übergeht. Der Profilabschnitt 14 ist zum unteren Randbereich des Profilabschnittes 11 parallel. Die Profilabschnitte liegen in diesem Bereich ohne Abstand aneinander. Der Profilabschnitt 15 geht über eine Abkantung 38 in den sehr kurzen Profilabschnitt 16 über, der über eine weitere Abkantung 39 in den Profilabschnitt 17 einmündet. Die Abkantungen 38, 39 und der Profilabschnitt 16 bilden eine Verkröpfung um die Dicke s des Bleches, aus dem das Profil hergestellt ist. Die Profilabschnitte 18, 19, 20, die jeweils über stumpfwinklige Abkantungen ineinander übergehen, bilden eine obere Längssicke 40 von trapezförmigem Querschnitt. Eine dazu parallele untere Längssicke 41, die den gleichen Querschnitt hat wie die Dicke 40, besteht aus den Profilabschnitten 22, 23, 24.

Der Profilabschnitt 26 ist wieder Bestandteil einer Verkröpfung um die Blechdicke. Der Profilabschnitt 27 geht wieder über eine stumpfwinklige Abkantung 42 in den Profilabschnitt 28 über, der über eine weitere stumpfwinklige Abkantung 43 in den Profilabschnitt 29 übergeht. Die Profilabschnitte 29, 31 gehen über eine 180°-Abkantung 44 ineinander über, während an den Profilabschnitt 31 über eine rechtwinklige Abkantung 45 der Profilabschnitt 32 anschließt. An diesen schließt über eine rechtwinklige Abkantung 46 der Profilabschnitt 33 an, der zum Profilabschnitt 29 parallel ist. Der obere Randbereich des Profilabschnittes 33 liegt ohne Abstand am Profilabschnitt 27 an. Die ohne Abstand aneinanderliegenden Bereiche des Bleches sind über Punktschweißungen 47, 48, 49 miteinander verschweißt. Ebenfalls sind die aneinanderliegenden Abschnitte 11 und 15 durch Punktschweißungen 50 miteinander verbunden.

Die Profilabschnitte 31 und 32 bilden zusammen einen Falz von der Breite $s_2$ für den Eingriff des Bodens 4, der die Dicke $s_3$ hat. Die Breite der Kanäle 8 und 9, gemessen an ihrer Außenseite, ist mit $s_1$ bezeichnet. Die Dicke s des Bleches beträgt vorzugsweise 1,25 mm.

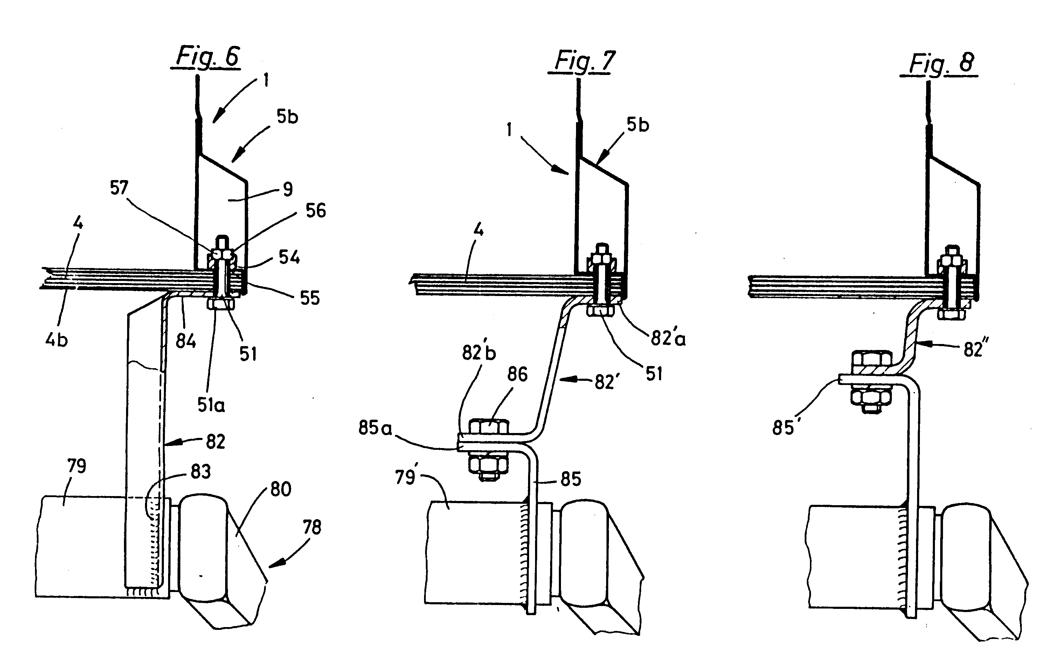

Der Boden 4 ist mit den Seitenwänden 5a und 5b und mit der vorderen Querwand 6 durch Schrauben 51 verbunden. Jede Schraube 51 durchgreift ein Durchgangsloch 52 im Boden 4 und ein Durchgangsloch 53 in der unteren Wand 32 des unteren Kanales 9. Im Kanal 9 ist (siehe dazu z.B. auch Fig. 6) ein Einlegestück 54 vorgesehen, das seinerseits ein Durchgangsloch 55 aufweist. In jedem Einlegestück 54 befindet sich eine Vertiefung 56 für die Aufnahme einer Schraubenmutter 57. Die Vertiefung ist sechskantig, so daß die sechskantige Mutter 57 undrehbar in dem Einlegestück 54 gehalten ist.

Die Schrauben 51 sind Kopfschrauben, z.B. mit einem Sechskantkopf 51a. Zwischen dem Schraubenkopf 51a und dem Boden 4 ist an jeder Schraube ein Federring 58 und eine Unterlegscheibe 59 angeordnet. Dadurch wird ein Losdrehen der Schraube verhindert und durch die Unterlegscheibe 59 eine Beschädigung des Bodens 4 vermieden.

Der Boden 4 besteht vorteilhafterweise aus einer größeren Zahl von miteinander verleimten Holzschichten. Die Oberseite 4a ist aufgerauht, um dem Boden rutschfest zu machen. Vorzugsweise ist der Boden mit einem Kunstharz, vorzugsweise Phenol-Harz, beschichtet.

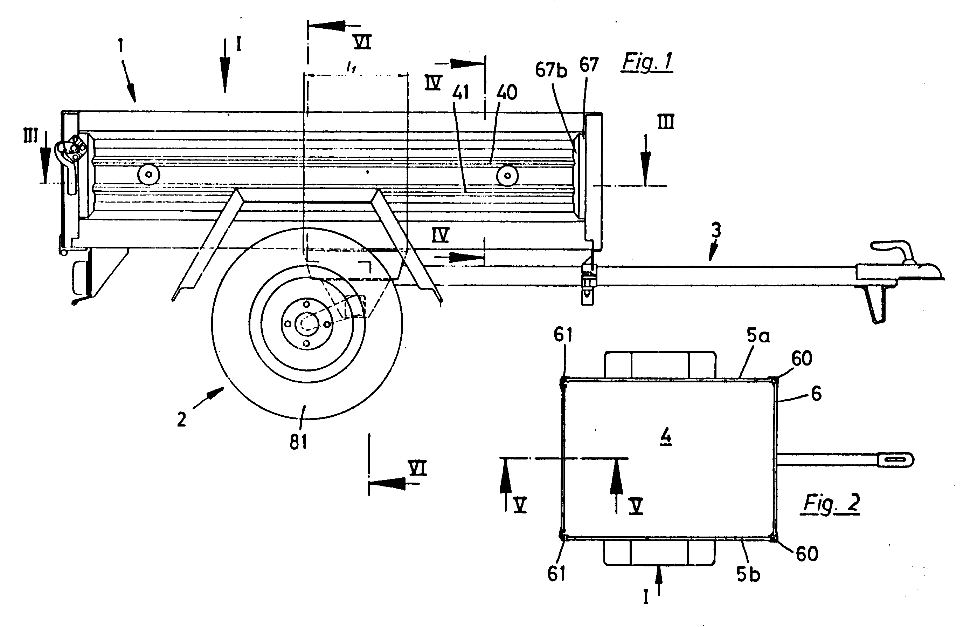

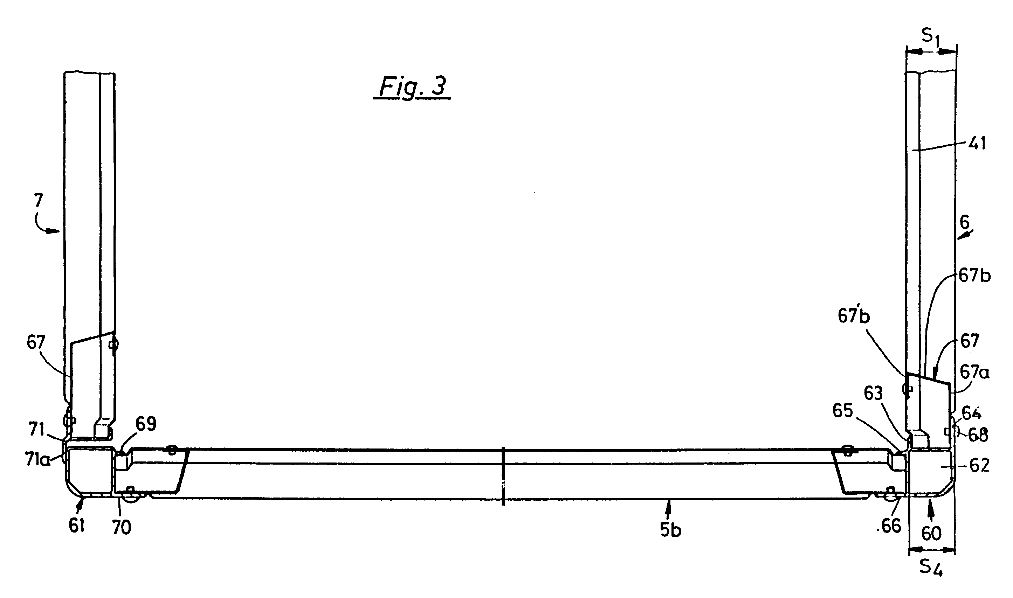

An den vorderen Ecken des Wagenkastens 1 sind Pfosten 60 und an den hinteren Ecken Pfosten 61 angeordnet (siehe Fig.2), deren Querschnitte aus Fig. 3 ersichtlich sind. Die Pfosten 60 sind Hohlprofile mit einer Höhlung 62. Von dem kastenförmigen, die Höhlung 62 enthaltenden Teil des Pfostens ragen Rippen 63, 64 bzw. 65, 66 ab. Die Rippenpaare 63/64 und 65/66 umfassen die Enden der Bordwände. Die Bordwände sind an ihren Enden durch Verquetschen so verformt, daß die Kanäle 8, 9 in ihren Endbereichen eine Breite $s_4$ aufweisen, die geringer ist als die volle Breite $s_1$ der Kanäle. Der lichte Abstand zwischen Rippenpaaren 63/64 bzw. 65/66 ist so, daß die Enden der Kanäle zwischen die Rippen eingeführt werden können. Es ist dadurch möglich, gleiche Pfostenprofile zu verwenden, unabhängig davon, ob die Bordwände aus Aluminium-Strangprofilen bestehen, die schmäler sind als die Breite $s_1$ der Kanäle 8, 9 oder ob Bordwände gemäß der vorliegenden Erfindung verwendet werden.

Zur Abdichtung des Wagenkastens in den Eckbereichen sind winkelförmige Füllbleche 67 vorgesehen. Die Füllbleche haben einen Schenkel 67a, der mit der Rippe 64 verbunden ist, wofür gleiche Nieten 68 verwendet sind, mit denen auch die Rippe 64 mit der Bordwand 6 verbunden ist. Ein zweiter Schenkel 67b hat eine solche Ausbildung seines Rands 67'b, daß sich dieser an die äußeren Unebenheiten der Bordwand, nämlich an die Sikken 40, 41 anpaßt. Diese Anpassung ist aus Fig. 1 zu ersehen.

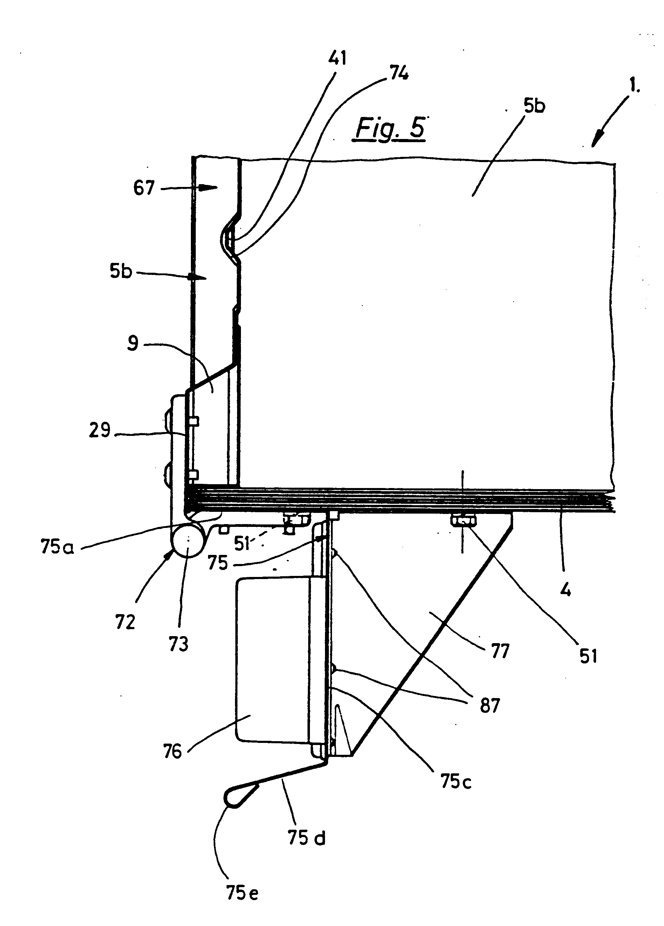

Am hinteren Ende des Wagenkastens 1 befinden sich etwas anders gestaltete Pfosten 61. Diese haben nur zwei Rippen 68, 70 zum Umfassen der Längswände. Die hintere Wand 7, die abklappbar ist, wird naturgemäß nicht am Pfosten fixiert. Diese Bordwand hat an ihren seitlichen Enden Profile 71, die einen Anschlag 71a zum Anschlagen an den Pfosten 61 aufweisen. Aus Fig. 5 ist ersichtlich, wie die Rückwand 5b des Wagenkastens mittels Beschlägen 72 gehalten ist. Die Beschläge 72 haben ein Gelenk 73 und sind sowohl an der Unterseite des Kastenbodens 4 als auch an der Rückwand 5b befestigt, und zwar an der Außenwand 29 des unteren Kanales 9. Auch an der Rückwand sind Füllbleche 67 vorgesehen. In Fig. 5 ist ebenfalls die Anpassung der Füllbleche an die Sicken dargestellt. Ein entsprechender Ausschnitt 74 im Füllblech ist erkennbar.

Am hinteren Ende des Bodens 4 ist eine insgesamt mit 75 bezeichnete Traverse angeordnet. Die Traverse 75 hat eine waagerechte Wand 75a, die an der Unterseite des Kastenbodens 4 anliegt, eine senkrechte, nach unten vom Kastenboden 4 abragende Wand 75c und eine Wand 75d, die stumpfwinklig an die Wand 75c anschließt und nach hinten ragt. Zur Vermeidung einer scharfen Kante ist am Ende der Wand 75d durch Umbiegen des Bleches eine Abrundung gebildet. Die Traverse wird ebenfalls von Schrauben 51 durchgriffen, so daß mit diesen Schrauben auch die Traverse mit den Seitenwänden 5a, 5b verbunden wird. Zur Absteifung der Traverse gegenüber dem Wagenkasten dienen dreieckige Bleche 77, die mit der vertikalen Wand 75c durch Niete 87 verbunden ist. Die Traverse 75 dient auch als Träger für Rückleuchten 76 und für ein Nummernschild.

Das Fahrgestell 2 hat eine insgesamt mit 78 bezeichnete Achse. Die Achse 78 hat ein Rohr 79, das sich unterhalb des Wagenkastens 1 erstreckt. Im Rohr 79 sind Schwingarme 80 gelagert, die gegenüber dem Rohr 79 abgefedert sind. An den Enden der Schwingarme 78 sitzen Laufräder 81. Die Achse 78 ist mittels Achsböcken 82 mit dem Wagenkasten 1 verbunden.

Fig. 6 zeigt eine Ausführungsform, bei der jeder Achsbock 82 unmittelbar mit dem Rohr 79 verschweißt ist (Schweißnaht 83). Der Achsbock 82 hat einen oberen horizontalen Flansch 84, der an der Unterseite 4b des Wagenkastenbodens 4 anliegt. Der Flansch 84 ist von einer Schraube 51 durchgriffen, die in gleicher Weise in die Seitenwand 5b eingeschraubt ist, wie dies anhand der Fig. 4 erläutert wurde und die demgemäß zugleich als Bodenbefestigungsschraube wirksam ist. Der Befestigungsflansch 84 ist verhältnismäßig lang. Seine Länge $l_1$ (siehe Fig. 1) beträgt mindestens 150 mm. Man erhält dadurch eine günstige Einleitung der Stützkräfte in die Wände 5a und 5b.

Bei der Variante gemäß Fig. 7 ist der hier mit 82' bezeichnete Achsbock als Z-Profil ausgebildet, das durch Abkanten eines Bleches gebildet ist. Der Achsbock hat einen oberen Flansch 82'a, der mit dem Wagenkasten 1 verschraubt ist und einen unteren Flansch 82'b. An dem Achsrohr 79' ist ein Blech 85 angeschweißt, das einen oberen horizontalen Schenkel 85a hat, der am Schenkel 82'b des Achsbockes 82' anliegt und mit diesem mittels Schrauben 86 verschraubt ist. Auch bei der Ausführungsform nach Fig. 7 ist der Achsbock 82' mittels einer Schraube 51 befestigt, mit der zugleich die Wand 5b am Kastenboden 4 befestigt ist.

Die Ausführungsform nach Fig. 8 unterscheidet sich von der Ausführungsform nach Fig. 7 dadurch, daß der Achsbock 82" kürzer ausgebildet ist als der Achsbock 82' nach Fig.7. In beiden Fällen sind die Achsböcke Z-förmig gebogene Bleche. Die Konstruktion nach den Fig. 7 und 8 hat den Vorteil, daß die Höhe des Anhängers bequem geändert werden kann. Entweder kann man Achsen mit verschieden hoch liegenden Flanschen 85a, 85'a verwenden oder aber die Achsen einheitlich gestalten und die Achsböcke 82', 82" entsprechend abändern. In der Zeichnung sind beide Varianten gemeinsam dargestellt.

Durch die feste Verbindung der Wände 5a, 5b und 6, die ja eine hohe Steifigkeit haben, einerseits mit dem Boden 4 und andererseits untereinander an den vorderen Pfosten 60, wird eine stabile selbsttragende Einheit geschaffen. Wenn man auch die Rückwand 7 fest einbauen würde (in gleicher Weise wie die Vorderwand 6), hätte die als Winkelblech ausgebildete Traverse 75 für die Erzielung einer hohen Festigkeit keine nennenswerte Aufgabe. Wenn jedoch die Rückwand 7 abklappbar ist, wie dargestellt, kommt der Traverse für die Festigkeit des Wagenkastens 1 erhöhte Bedeutung zu.

**Patentansprüche**

1. Anhänger für Personenkraftwagen mit einem Wagenkasten, der einen rechteckigen Boden und von den Bodenkanten sich erhebende, aus einem Stück bestehende Bordwände aufweist, wobei die seitlichen Bordwände (Seitenwände) und mindestens eine quer dazu verlaufende Bordwand (Querwand) unmittelbar mit dem Boden verschraubt sind und die Gesamtheit aus Boden, Seitenwänden und Querwand unter Verzicht auf Längsträger eine selbsttragende Einheit bilden, dadurch gekennzeichnet, daß die Bordwände (5a, 5b, 6, 7) aus einteiligen Profilen aus verzinktem Stahlblech bestehen, wobei jede Bordwand (5a, 5b, 6, 7) längs ihrem oberen und ihrem unteren Rand einen Kanal (8, 9) aufweist und der zwischen den Kanälen (8, 9) liegende mittlere Bordwandbereich (10) einwandig ist, wobei ferner die Kanäle (8, 9) durch eine Überlappung des Bleches geschlossen sind, im Überlappungsbereich (11/15, 27/33) eine Verbindung (47, 48, 49, 50) zwischen den aufeinanderliegenden Blechlagen vorgesehen ist und am Rand des Überlappungsbereiches (11/15, 27/33) eine Verkröpfung (16, 26) des Profiles etwa um die Dicke (s) des Stahlbleches vorgesehen ist, die den Rand des Bleches übergreift.

2. Anhänger nach Anspruch 1, dadurch gekennzeichnet, daß der mittlere Bordwandbereich (10) Sicken (40, 41) aufweist, die sich parallel zu den Kanälen (8, 9) erstrecken und die vorzugsweise nach der Außenseite der Bordwand (5a, 5b, 6, 7) vorragen.

3. Anhänger nach Anspruch 2, dadurch gekennzeichnet, daß die Sicken (40, 41) einen trapezförmigen Querschnitt haben.

4. Anhänger nach Anspruch 1, dadurch gekennzeichnet, daß die Verbindungen aus Punktschweißungen (47, 48, 49, 50) bestehen.

5. Anhänger nach einem der vorhergehenden Ansprüche, dadurch gekennzeichnet, daß am Rand jeder Bordwand (5a, 5b, 6, 7) ein Falz (31 , 32) zum Umgreifen des zugeordneten Bodenrandes vorgesehen ist, wobei die obere Falzwand (32), an der die Oberseite (4a) des Bodens (4) anliegt, durch die Unterseite des unteren Kanales (9) und die seitliche Falzwand (31), an der die Bodenseitenfläche anliegt, durch eine Doppelung (31, 29) des Stahlbleches gebildet ist.

6. Anhänger nach einem der Ansprüche 1 bis 5, dadurch gekennzeichnet, daß zur Befestigung des Bodens (4) Durchsteckschrauben (51) dienen, die Löcher (52, 53) im Boden und in der unteren Wand (32) des unteren Kanales (9) durchgreifen und mit im Kanalinneren befindlichen Muttern (57) verschraubt sind.

7. Anhänger nach Anspruch 6, dadurch gekennzeichnet, daß die Muttern (57) auf im Kanalinneren befindlichen Druckstücken (54) aufliegen, wobei die Muttern (57) an diesen Druckstücken (54) vorzugsweise undrehbar gehalten sind.

8.  Anhänger nach einem der Ansprüche 1 bis 7, dadurch gekennzeichnet, daß die Innenseite der Bordwände (5a, 5b, 6, 7) im wesentlichen eben ist und die Kanäle (8, 9) nach der Außenseite der Bordwände (5a, 5b, 6, 7) vorragen.

9.  Anhänger nach einem der Ansprüche 1 bis 8, dadurch gekennzeichnet, daß die Kanäle (8, 9) parallele Kanal-Seitenwände (12, 13 bzw. 29, 33) haben, die parallel zur allgemeinen Bordwandebene sind und der obere Kanal (8) eine obere (12) und der untere Kanal (9) eine untere Kanalwand (32) aufweisen, die rechtwinklig zur allgemeinen Bordwandebene verlaufen und daß der oberen Kanalwand (12) und der unteren Kanalwand (32) jeweils eine schräge Kanalwand (14, 28) gegenüberliegt, die mit der äußeren Kanal-Seitenwand (13, 29) einen stumpfen Winkel einschließt.

10. Anhänger nach einem der vorhergehenden Ansprüche, dadurch gekennzeichnet, daß die Kanäle (8, 9) an den Enden auf eine geringere Breite reduziert und in dem reduzierten Bereich von Eckprofilen (60, 61) umgriffen sind.

11. Anhänger nach einem der vorhergehenden Ansprüche, dadurch gekennzeichnet, daß in den Eckbereichen Füllbleche (67) vorgesehen sind, die mit einer Wand (67a) an Eckprofilen (60, 61) anliegen, die rechtwinklig zueinander stehende Bordwände verbinden und mit der Endkante (67 b) einer weiteren Wand (67b) an die Außenkontur der Bordwände angepaßt sind.

12. Anhänger nach einem der vorhergehenden Ansprüche, dadurch gekennzeichnet, daß die Blechdicke (s) der Bordwände im Bereich von 0,8 bis 1,5 mm liegt, vorzugsweise ca. 1,25 mm beträgt.

## Claims

1.  A trailer for passenger cars, having a body which has a rectangular floor and tail and side boards comprising one piece and rising from the floor edges, wherein the lateral boards (side boards) and at least one board extending transversely thereto (tail board) are bolted directly to the floor and the assembly comprising floor, side boards and tail board, dispensing with longitudinal members, forms a self-supporting unit, characterised in that the tail and side boards (5a, 5b, 6, 7) comprise one-piece profiles made of galvanised steel sheet, each board (5a, 5b, 6, 7) having a channel (8, 9) along its upper and its lower edge and the central board region (10) located between the channels (8, 9) being single-walled, the channels (8, 9) furthermore being closed by an overlapping of the metal sheet, a joint (47, 48, 49, 50) being provided in the overlap region (11/15, 27/33) between the sheet metal layers lying one on top of the other and a crank (16, 26) of the profile of approximately the thickness (s) of the steel sheet being provided at the edge of the overlap region (11/15, 27/33) and engaging over the edge of the metal sheet.

2.  A trailer according to claim 1, characterised in that the central board region (10) has corrugations (40, 41) which extend parallel to the channels (8, 9) and which preferably project towards the outside of the board (5a, 5b, 6, 7).

3.  A trailer according to claim 2, characterised in that the corrugations (40, 41) have a trapezial cross-section.

4.  A trailer according to claim 1, characterised in that the joints comprise spot welds (47, 48, 49, 50).

5.  A trailer according to any one of the preceding claims, characterised in that a fold (31, 32) is provided on the edge of each board (5a, 5b, 6, 7) for engaging round the associated floor edge, the upper fold wall (32), against which the upper side (4a) of the floor (4) rests, being formed by the lower side of the lower channel (9), and the lateral fold wall (31), against which the side surface of the floor rests, being formed by a doubling (31, 29) of the steel sheet.

6.  A trailer according to any one of claims 1 to 5, characterised in that through bolts (51) serve to fasten the floor (4), which through bolts engage through holes (52, 53) in the floor and in the lower wall (32) of the lower channel (9) and are secured by nuts (57) located in the channel interior.

7.  A trailer according to claim 6, characterised in that the nuts (57) rest on thrust pieces (54) located in the channel interior, the nuts (57) preferably being held on the said thrust pieces (54) in a non-rotatable manner.

8. A trailer according to any one of claims 1 to 7, characterised in that the inside of the tail and side boards (5a, 5b, 6, 7) is substantially flat and the channels (8, 9) project towards the outside of the tail and side boards (5a, 5b, 6, 7).

9. A trailer according to any one of claims 1 to 8, characterised in that the channels (8, 9) have parallel side walls (11, 13 or 29, 33) which are parallel to the general board plane and the upper channel (8) has an upper wall (12) and the lower channel (9) a lower wall (32) which extend at right angles to the general board plane and in that the upper channel wall (12) and the lower channel wall (32) each lie opposite an oblique channel wall (14, 28) which form an obtuse angle with the outer channel side wall (13, 29).

10. A trailer according to any one of the preceding claims, characterised in that the channels (8, 9) are reduced to a relatively small breadth at the ends and are embraced in the reduced region by angular profiles (60, 61).

11. A trailer according to any one of the preceding claims, characterised in that in the corner regions, filler metal sheets (67) are provided which rest with one wall (67a) against angular profiles (60, 61) which connect tail and side boards positioned at right angles to each other and which with the end edge (67'b) of a further wall (67b) are adapted to the outer contour of the tail and side boards.

12. A trailer according to any one of the preceding claims, characterised in that the sheet metal thickness (s) of the tail and side boards is in the region of 0.8mm to 1.5mm, preferably approximately 1.25mm.

## Revendications

1. Remorque pour voiture particulière, comportant une caisse qui présente un fond rectangulaire et des ridelles qui s'élèvent sur les bords du fond et sont constituées d'une pièce, les ridelles latérales (parois latérales) et au moins une ridelle s'étendant transversalement à celles-ci (paroi transversale) étant directement vissées sur le fond, et le fond, les parois latérales et la paroi transversale formant conjointement un tout autoportant en l'absence de longerons, caractèrisée en ce que les ridelles (5a, 5b, 6, 7) sont constituées de profilés monoblocs en tôle d'acier galvanisée, chaque ridelle 5a, 5b, 6, 7) présentant, le long de son bord supérieur et de son bord inférieur, un canal (8, 9), et la zone centrale (10) de la ridelle située entre les canaux (8, 9) étant d'une seule pièce, les canaux (8, 9) étant par ailleurs fermés par un recouvrement de la tôle, une liaison (47, 48, 49, 50) entre les couches de tôle superposées étant prévue dans la zone de recouvrement (11/15, 27/33), et un repli (16, 26) du profilé à peu près de l'épaisseur (s) de la tôle d'acier étant prévu sur le bord de la zone de recouvrement (11/15, 27/33), repli qui recouvre le bord de la tôle.

2. Remorque selon la revendication 1, caractérisée en ce que la zone centrale (10) des ridelles présente des moulures (40, 41) qui s'étendent parallèlement aux canaux (8, 9) et font saillie, de préférence, vers le côté externe de la ridelle (5a, 5b, 6, 7).

3. Remorque selon la revendication 2, caractérisée en ce que les moulures (40, 41) ont une section transversale trapézoïdale.

4. Remorque selon la revendication 1, caractérisée en ce que les liaisons sont constituées de points de soudure (47, 48, 49, 50).

5. Remorque selon l'une quelconque des revendications précédentes, caractérisée en ce que, sur le bord de chaque ridelle (5a, 5b, 6 et 7), est prévu une rainure (31, 32) destinée à enserrer sur le bord du fond qui lui correspond, la paroi de rainure supérieure (32), sur laquelle s'appuie la partie supérieure (4a) du fond (4), étant formée par le côté inférieur du canal inférieur (9), et la paroi de rainure latérale (31) sur laquelle s'appuie la surface latérale du fond, par un doublement (31, 29) de la tôle d'acier.

6. Remorque selon l'une quelconque des revendications 1 à 5, caractérisée en ce qu'on se sert pour fixer le fond (4) de vis (51) traversantes qui passent à travers des orifices (52, 53) du fond et de la paroi inférieure (32) du canal inférieur (9) et sont vissés sur des écrous (57) qui se trouvent à l'intérieur des canaux.

7. Remorque selon la revendication 6, caractérisée en ce que les écrous (57) s'appuient sur des pièces de pression (54) qui se trouvent à l'intérieur des canaux, les écrous (57) étant retenus, de préférence sans pouvoir tourner, sur ces pièces de pression (54).

**8.** Remorque selon l'une quelconque des revendications 1 à 7, caractérisée en ce que le côté interne des ridelles (5a, 5b, 6, 7) est sensiblement uni et les canaux (8, 9) font saillie sur le côté externe des ridelles (5a, 5b, 6, 7).

**9.** Remorque selon l'une quelconque des revendications 1 à 8, caractérisée en ce que les canaux (8, 9) ont des parois latérales (11, 13, ou 29, 33) parallèles qui sont également parallèles au plan général des ridelles, et le canal supérieur (8) présente une paroi supérieure (12) et le canal inférieur (9) une paroi inférieure (32), qui s'étendent à angle droit avec le plan général des ridelles, et en ce que la paroi de canal supérieur (12) et la paroi de canal inférieure (32) sont respectivement en regard d'une paroi de canal oblique (14, 28) qui fait un angle obtus avec la paroi latérale externe (13, 29) du canal.

**10.** Remorque selon l'une quelconque des revendications précédentes, caractérisée en ce que les canaux (8, 9) se réduisent, aux extrémités, à une largeur moindre et sont enveloppés, dans la zone de largeur réduite, par des profilés d'angle (60, 61).

**11.** Remorque selon l'une quelconque des revendications précédentes, caractérisée en ce que les zones d'angle sont pourvues de pièces de tôle (67) qui s'appuient par une aile (67a) sur des profilés d'angle (60, 61) lesquels relient à angle droit les ridelles contigües, et qui s'adaptent au contour externe des ridelles par l'arête terminale (67'b) d'une autre aile.

**12.** Remorque selon l'une quelconque des revendications précédentes, caractérisée en ce que l'épaisseur de la tôle (s) des ridelles se situe au voisinage de 0,8 à 1,5 mm, de préférence à 1,25 mm.

Fig. 1

Fig. 2

EP 0 240 712 B1

_Fig. 3_

Fig. 4

Fig. 5

_Fig. 6_

_Fig. 7_

_Fig. 8_

EP 0 240 712 B1